# EUROPEAN PATENT SPECIFICATION

(11) **EP 2 653 486 B1**
(45) Date of publication and mention of the grant of the patent: **03.12.2014**
(21) Application number: 12164857.0
(22) Date of filing: 20.04.2012
(51) Int. Cl.: C08G 59/50

(54) **Low density epoxy composition with low water uptake**
Epoxyzusammensetzung mit geringer Dichte und geringer Wasseraufnahme
Composition d'époxy à faible densité et à faible absorption d'eau

(43) Date of publication of application: 23.10.2013
(73) Proprietor: 3M Innovative Properties Company, Saint Paul, MN 55133-3427 (US)
(72) Inventor: Elgimiabi, Sohaib, 40629 Düsseldorf (DE)
(74) Representative: Gabriel, Kiroubagaranne

(56) References cited:
- EP-A1- 0 838 499
- WO-A1-2010/117669
- WO-A2-2007/149377
- US-A1- 2010 310 878

## Description

### Field

In general, this disclosure relates to epoxy resin based curable compositions. The compositions are in particular suitable as coating compositions for the exterior parts of an article. The disclosure also relates to the cured compositions, articles containing the cured compositions and to methods of coating exterior surfaces of articles using the curable compositions.

### Background Art

Transportation vehicles and power generating devices, in particular those using wind energy, are increasingly prepared using low weight materials and composite materials are used to replaces metals. Composite materials, typically fiber reinforced polymeric resins, tend to have a rough and uneven surface or cutting edges. This presents problems for applying high quality paints and finishes and may also negatively impact on the aerodynamics. Polysulfide-based compositions have been used to coat exterior surfaces of aircrafts, or more particular, the surfaces of exterior components of aircrafts.

However, there is a need for alternative coating compositions. Favourably, such compositions and the resulting coating are of low weight (or low density). In addition to their low density they desirably have a low water uptake to retain their low weight also under wet conditions.

### Summary

In the following there are provided curable compositions as defined in the claims and as described herein. In particular there is provided a curable composition comprising
(i) at least one aromatic epoxy resin;
(ii) at least one curing agent for curing the aromatic epoxy resin said curing agent comprising at least one cycloaliphatic amine;
(iii) at least one fatty acid polyamide having a melting point of from 100°C to 145°C, wherein the fatty acid polyamide contains at least two end-groups according to the formula (I)

   -NR^{a}-CO-R^{b}

   wherein R^{a} represents H or an alkyl group having from 1 to 4 carbon atoms and R^{b} represents a saturated or unsaturated alkyl chain containing from 3 to 27 carbon atoms; and
(iv) at least one filler material comprising hollow particles.

In another aspect there is provided a cured composition obtained by curing the curable composition.

In a further aspect there is provided a method of coating a substrate the method comprising
i) providing the curable compositions;
ii) applying the curable compositions to the substrate;
iii) subjecting the curable compositions to curing.

In yet another aspect there is provided an article having an external surface, said surface comprises a coating comprising the cured compositions.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to encompass the items listed thereafter and equivalents thereof as well as additional items. The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

### Curable coating compositions:

Curable compositions according to the present disclosure comprise:
at least one aromatic epoxy resin,
at least one curing agent for curing the aromatic epoxy resin, said curing agent comprising
at least one cycloaliphatic amine,
at least one fatty acid polyamide and
at least one filler material comprising hollow particles.

While curable epoxy resin compositions have been known to be suitable as fillers or adhesives for components in the transportation industries (so-called body-shell adhesives or fillers), these applications usually concern the interior components of the transportation vehicle. The curable compositions provided herein show a significant reduced water uptake and are therefore advantageously used on exterior areas, i.e. areas where the cured composition are exposed to moisture and where weight increase by water uptake is to be reduced. Therefore, coatings prepared from the curable compositions are suitable for external surfaces of articles, in particular components that form the external part of an aircraft or a wind power station when assembled therein, rotor blades of wind turbines or helicopters or wings of an aircraft.

In addition to their low water uptake the reaction products from the curable compositions provide a smooth surface with no number or low numbers of visible cracks or wholes. Such surface can be conveniently painted or lacquered, if necessary.

### Epoxy resins:

Epoxy resins are polymeric organic compounds having one or more epoxy-functionality. They are polymerizable or curable, typically, by a ring opening reaction of the epoxy functionality. The epoxy resins may have an average epoxy-functionality of at least 1, greater than one, or of at least 2 or greater than 2.

The epoxy resins are typically aromatic. Preferably, the epoxy resins contain moieties of the glycidyl or polyglycidyl ether type. Such moieties may be obtained, for example, by the reaction of a hydroxy functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol or in case of polyphenols at least two hydroxy groups are bonded to an aromatic ring. This means the hydroxyl groups can be bonded to the same ring of the polyphenol or to different rings of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups. Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphrhylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxyphenylmethylpropylmethane, dihydroxydiphenylethylphenylmethane, dihydroxydiphenyl-propylenphenylmethane, dihydroxydiphenylbutylphenylmethane, dihydroxydiphenyl-tolylethane, dihydroxydiphenyltolylmethylmethane, dihydroxydiphenyldicyclohexyl-methane, and dihydroxydiphenylcyclohexane.

Preferred epoxy resins include epoxy resins containing glycidyl ethers or polyglycidyl ethers of dihydric or polyhydric phenols, such as for example, but not limited to bisphenol A, bisphenol F, bisphenol A/F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by formula (II) wherein n denotes the repeating unit (in case of n= 0 formula (II) represents the diglycidyl ether of bisphenol A):

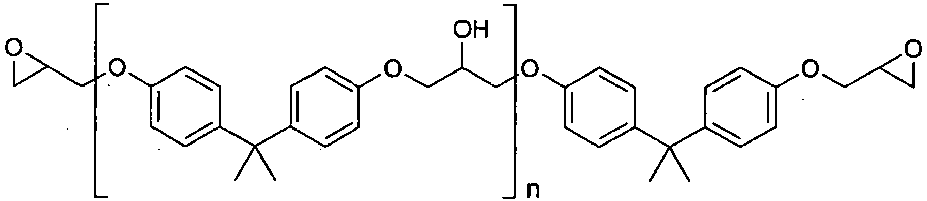

Typically, the epoxy resins are blends of several resins. Accordingly, n in formula (II) may represent an average value of the blend, and may not be an integer but may include values like, for example and not limited thereto, 0.1 to 2.5.

Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example acyclic, linear or branched, epoxy resins may be used.

Typically, the epoxy resin is liquid. The epoxy resins may include solid epoxy resins, used in dissolved form, or dispersed, for example in another liquid resin. Preferably, the epoxy resin is liquid at ambient conditions (23°C, 1 bar). Typically, the epoxy resins may have a viscosity as measured according to ASTM D445 of from about 4 to about 10, preferably from about 4.5 to 6.0 mPa.s at 20°C.

Preferably the epoxy resins according to the present disclosure have an epoxy equivalent weight of from about 170 to 200 (ASTM D 1652).

The epoxy resins may contain halogens, preferably bromine atoms to make them less flammable.

Examples of suitable and commercially available epoxy resins include diglycidylether of bisphenol A (e.g. available under the trade designation EPON 828, EPON 830 or EPON 1001 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Typically, the compositions provided herein comprise 10 to 70 percent by weight, preferably from 15 to 60 percent by weight, more preferably from 15 to 55 percent by weight and especially preferably from 15 to 50 percent by weight of one or more epoxy resin based on the total weight of the curable composition.

### Curing agents

The curable compositions according to the present disclosure comprise at least one curing agent for curing the curable epoxy resin. The curing agent comprises at least one cycloaliphatic amine. The term "cycloaliphatic amine" as used herein refers to an amine that contains at least one cycloaliphatic group. The cycloaliphatic amines are preferably primary amines and contain at least one primary amine group (e.g. -NH₂ group). Typical examples of cycloaliphatic amines include primary amines containing one or two cyclohexyl, cycloheptyl, or cyclopentyl groups or combinations thereof. The cycloaliphatic group is typically in alpha-, or beta-position to the amine groups (alpha-position means directly bonded to the amine. Beta-position means the position adjacent to the alpha-position). Particular examples of cycloaliphatic amine curing agents include 1,4-diaminocyclohexane ; 4,4'-diaminodicyclohexylmethane ; 1,3-diaminocyclopentane ; 4,4'-diaminodicyclohexylsulfon ; 4,4'-diamino-dicyclohexyl-propane-1,3 ; 4,4'-diamino-dicyclohexyl-propane-2,2 ; 3,3'-dimethyl-4,4'-diaminodicyclohexylmethane, 3-aminomethyl-3,3,5-trimethyl cyclohexyl amine (Isophorone diamine) or aminomethyl tricyclodecane.

Suitable cycloaliphatic amine curing agents are commercially available under the trade designation ANCAMINE 2264, ANCAMINE 2280, ANCAMINE 2286 (from Airproduct and Chemical Inc, Allentown, PA, USA) or BAXXODUR EC 331 (from BASF, Ludwigshafen, Germany) or VERSAMINE C31 (from Cognis, Monheim, Germany) or EPICURE 3300 (from Momentive Specialty Chemicals, Inc, Columbus, Ohio, USA).

The compositions as provided herein may typically comprise from 10 to 40% by weight cycloaliphatic amine based on the total weight of the curable composition. Typically, the ratio of cycloaliphatic amines to epoxy groups is chosen to be about 2:1 with a deviation of about 10 %. This means that typically within this variation the curable compositions contain one amine group per two epoxy groups.

### Fatty acid polyamides

The curable compositions provided by the present disclosure contain at least one fatty acid polyamide. The fatty acid polyamide melts at a temperature between about 100°C to about 155°C, preferably between about 120°C to about 140°C. The fatty acid polyamide may have a melting point or a melting range at those temperatures.

The fatty acid polyamides contain at least two end-groups according to the formula (I)

-NR¹-CO-R²

wherein R¹ represents H or an alkyl group having from 1 to 4 carbon atoms, preferably R¹ represents H. R² represents a saturated or unsaturated but preferably saturated alkyl chain containing from 3 to 27 carbon atoms, preferably from 11 to 23 carbon atoms. The chain may be linear or branched or cyclic. Preferably the chain is saturated. The fatty acid polyamide can typically be obtained from the condensation reaction of a carboxylic acid according to formula (III)

MOOC-R²

which preferably is a fatty acid or a combination of fatty acids with the primary or secondary amine groups of a diamine or polyamine. Typically, the carboxylic acid is a carboxylic acid according to the formula (III) wherein R² is a defined above. Preferably, the carboxylic acid is a fatty acid or a mixture of fatty acids or a mixture of carboxylic acids. The carboxylic acids may be saturated or unsaturated and typically contain from 4 to 28 carbon atoms, preferably from 12 to 24 carbon atoms. Examples of useful carboxylic acids include fatty acids, for example saturated fatty acids. Examples of saturated fatty acids include but are not limited to hexanoic acid, nonanoic acid, dodecanoic acid, tetradecanoic acid, hexadecanoic acid, and octadecanoic acid and mixtures containing them. Examples of useful unsaturated fatty acids include ricinoleic acid ((9*Z*,12*R*)-12-Hydroxyoctadec-9-enoic acid), oleic acid ((9*Z*)-Octadec-9-enoic acid) and linoleic acid (*cis*, *cis*-9,12-Octadecadienoic acid). The fatty acids may be synthetic origin or may be from natural occurring origin, such as vegetable oils, including castor oil, soybean oil, tall oil, and linseed oil. Partially or fully hydrogenated vegetable oil, such as for example hydrogenated castor oil, may also be used.

Useful diamines or polyamines for the preparation of the fatty acid polyamide include aliphatic, cycloaliphatic or aromatic diamines. The diamines or polyamines typically have from 2 to 40 carbon atoms. Preferably, the amines are diamines. Examples of useful diamines include but are not limited to ethylene diamine, 1,2-diaminopropane, 1,3-diaminopropane, 1,4-diaminobutane, p-xylene diamine, 1,6-hexamethylene diamine, 2-methypentamethylene diamine, 4,4'-methylene bis(cyclohexylamine), 2,2-di-(4-cyclohexylamine), 2,2-di(4-cyclohexylamine) propane, polyglycol diamines, isophorone diamine, m-xylene diamine, cyclohexane bis(methylamine), bis-1,4-(2'-aminoethyl)benzene, 9-aminomethylstearylamine, 10-aminoethylstearylamine, 1,3-di-4-piperidyl propane, 1,10-diaminodecane, 1,12-diaminododecane, 1,18-diaminooctadecane, piperazine, N-aminoethylpiperazine and bis-(3-aminopropyl)piperazine.

Fatty acid polyamides useful in the coating composition according to the invention are commercially available under the trade designation DISPARLON, including DISPARLON 6100, 6200, 6500, 6600, 6650 or 6700 (available from Kusumoto Chemicals Ltd., Japan) or LUVOTIX, including LUVOTIX HT (available from Lehmann & Voss & Co., Germany).

Mixtures of fatty acid polyamides can also be used.

The weight percent of the fatty acid polyamide in the curable coating composition is typically between about 1.0 to about 10 % by weight, in particular between 1.5 and about 4 % by weight based on the total weight of the curable coating composition.

The fatty acid polyamides may be combined with hydrocarbon oils or hydrocarbon solids which melt at a temperature between 50°C and 100°C. The addition of these hydrocarbons may further increase the evenness of the resulting coating.

### Filler materials comprising hollow particles:

The curable compositions further comprise at least one filler material comprising hollow particles (also referred to hereinafter as "light weight filler"). The light weight filler typically is capable of reducing the density of the composition. Capable of reducing the density of the composition as used herein means the filler has a lower density than the composition without the filler. Fillers capable of reducing the density of the composition include inorganic and organic materials, like low density inorganic fillers, (i.e., fillers having a density of between about 0.1 to about 0.5 g/cm³) and low density organic fillers (i.e., fillers having a density of between about 0.05 to about 0.40 g/cm³).

Typically, the compositions comprise from 15 to 60 % by weight of the light weight fillers based on the total weight of the composition. A combination of organic and inorganic fillers may be used but the inorganic low density fillers are preferably used in excess over the organic fillers. Preferably, the light weight filler material is selected from hollow particles, such as for example hollow inorganic or organic particles, preferably inorganic particles, for example inorganic microspheres. The hollow part of the particles may be filled by a gas or mixtures of gasses, a liquid or mixtures thereof, or a mixture of one or more gases and one or more liquids, or may be a vacuum. The inorganic microspheres may be selected from a variety of materials including by way of example glass, or ceramic (including sol-gel derived). The inorganic particles typically contain silicon-oxides, aluminium oxides or combinations thereof.

The inorganic particles may be in the form of free flowing powders. Preferably they have a relatively homogenous particle size. The average particle size typically is less than 500µm, preferably between 1 and 300 µm, preferably from 5 to 200 µm and more preferably between 10 and 100µm. The average can be expressed as D50 value, i.e. 50% by weight of the particles have a particle size as specified above. The D50 value can be determined by sieving. The inorganic microspheres preferably exhibit a density of less than 0.5 g/cm³, more preferably of between 0.1 and 0.45 g/cm³ and especially preferably of between 0.12 and 0.42 g/cm³.

Preferred hollow inorganic microspheres include glass microspheres which are commercially available, for example, from 3M Company under the trade designation GLASS BUBBLES D32 or K42HS and SCOTCHLITE D32/4500.

The compositions provided herein may also contain organic microspheres. The organic microspheres are polymeric microspheres. Polymeric microspheres are made of organic polymers, i.e. materials comprising repeating units derived from monomers containing at least one unsaturated carbon-carbon bond. Typical examples of suitable polymers include, but are not limited to, acrylonitrile polymers or copolymers, acrylate polymers or copolymers, vinylidene polymers or copolymers, polyacetate polymers or copolymers, polyester polymers or copolymers, vinylidenechloride/acrylonitrile copolymers, acrylate/acrylonitrile copolymers or combinations thereof.

The average diameter of the organic microspheres preferably is between 15 and 200 µm, and more preferably between 20 and 180 µm. Typically, the density of the organic microspheres is between 0.05 and 0.40 g/cm³.

Low density organic fillers can be selected from unexpanded and pre-expanded organic hollow microspheres. Unexpanded organic hollow microspheres are available, for example, from Akzo Nobel under the trade designation EXPANCEL. Unexpanded organic hollow microspheres are sometimes also referred to as expandable organic microballoons which are also available, for example, from Lehmann and Voss, Hamburg, Germany under the trade designation MICROPEARL. Pre-expanded organic hollow microspheres are commercially available, for example, under the trade designation DUALITE from Henkel Corporation, CT, USA In one embodiment the compositions comprise a combination of inorganic and organic particles as described above.

The concentration and the nature of the fillers used in the curable compositions is preferably selected such that the density of the cured composition is less than 0.9 g/cm³, more preferably less than 0.8 g/cm³ and most preferably between about 0.4 and 0.6 g/cm³_{.}

### Other ingredients

The compositions of the present disclosure may comprise further ingredients and adjuvants, which may be used to further regulate rheological properties or adapt the visual appearance of the compositions. These additional materials include, for example, fillers other than those described above, thixotropic agents, reactive diluents, secondary curatives, pigments, antioxidants, adhesion promoters, fire retardants, wetting agents and the like.

Reactive diluents may be added to control the flow characteristics of the composition. Suitable diluents can have at least one reactive terminal end portion and, preferably, a saturated or unsaturated aliphatic cyclic backbone. Preferred reactive terminal end portions include glycidyl ether. Examples of suitable diluents include glycidyl ethers of monofunctional saturated or unsaturated, branched or unbranched, cyclic or open-chain aliphatic C4-C30 alcohols, e.g. butyl glycidyl ether, hexyl glycidyl ether, 2-ethylhexyl glycidyl ether, allyl glycidyl ether, trimethoxysilyl glycidyl ether etc; glycidyl ethers of difunctional saturated or unsaturated, branched or unbranched, cyclic or open-chain aliphatic C2-C30 alcohols, e.g. ethylene glycol glycidyl ether, butanediol glycidyl ether, hexanediol glycidyl ether, octanediol glycidyl ether, cyclohexane dimethanol diglycidyl ether, neopentyl glycol diglycidyl ether etc.; glycidyl ethers of trifunctional or polyfunctional, saturated or unsaturated, branched or unbranched, cyclic or open-chain aliphatic alcohols such as epoxidized trimethylolpropane, epoxidized pentaerythrol, or polyglycidyl ethers of aliphatic polyols such as sorbitol, glycerol, trimethylolpropane, etc. The di- or triglycidyl ethers of cyclohexane dimethanol, neopentyl glycol and trimethylolpropane are preferred. Commercially available reactive diluents are for example under the trade designations "Reactive Diluent 107" from Hexion or "Epodil 757" from Air Products and Chemical Inc, Allentown, PA, USA. Reactive diluents may be added in amounts up to 15% by weight based on the total curable composition, typically from about 0.5 to about 8% by weight based on the total weight of the curable composition.

Secondary curatives may be added to increase the curing speed. Useful secondary curatives include imidazoles, imidazole-salts, imidazolines or aromatic tertiary amines including those having the structure of formula (IV): 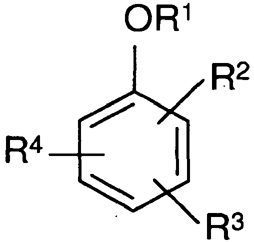 wherein
R¹ is H or alkyl, such as, e.g., methyl or ethyl, preferably methyl; R² is CHNR⁵R⁶;
R³ and R⁴ may be, independently from each other, present or absent and when present R³ and R⁴ are CHNR⁵R⁶; R⁵ and R⁶ are, independent from each other, alkyl, preferably CH₃ or CH₂CH₃.

An example of a useful secondary curative is tris-2,4,6-(dimethyl amino methyl)phenol, commercially available as ANCAMINE K54 from Air Products Chemicals Europe B.V.

Further materials include wetting agents. The wetting agent improves the mixability and processability of the composition and can also enhance the composition's handling characteristics. Wetting agents may be added to improve the dispersion of ingredients, in particular fillers. Suitable wetting agents include long chain carboxylic acids, long chain sulfonic acids and phosphoric acid esters. Other examples of suitable wetting agents include titanates, silanes, zirconates, zircoaluminates. Preferably, the wetting agents are used as mixtures. Examples of useful commercial wetting agents include, for example but not limited thereto, silanes, commercially available as SILANE Z-6040 (DOW-Corning) and phosphoric acid esters commercially available from BYK Chemie GmbH. The concentration of the wetting agent is typically lower than 6 percent by weight and more preferably not more than 5 percent by weight based on the total weight of the composition.

Pigments may include inorganic or organic pigments including ferric oxide, brick dust, carbon black, titanium oxide, Chromophtal blue and the like. Different pigments may be added to the individual reactive components (or pigments may be added to one component but not to the other) in case of 2K (two component) compositions to allow to visibly determine the preparation of a homogeneous mixture of the components.

An advantage of the curable compositions provided herein is that they result upon curing in a coating having good compressive strength over a wide temperature range, for example a compression strength of at least about 3 MPa at 23°C and at 106°C. This compressive strength can be obtained without adding polymeric tougheners. The addition of polymeric tougheners would increase the viscosity of the curable composition such that they may no longer be extrudable at low pressure at room temperature (i.e. at pressures between about 4 to 10 bar at 23°C). Polymeric tougheners are known in the art as organic (i.e. hydrocarbon-based) polymers that can be added to curable epoxy compositions to increase the toughness of the resulting cured composition. Typically, polymeric tougheners, when added at a weight ratio of from about 0.1, preferably at 0.5% by weight based on the weight of the epoxy-resins, increase the tensile strength of the cured composition by more than 5%. Polymeric tougheners may be solid or liquid. Typically solid polymeric tougheners are block copolymers or core-shell polymers, such as copolymers of monomers having an olefinic double bond, typically one in which the double bond is conjugated directly with a hetero atom or with at least one other double bond. Such monomers are typically selected from the group including styrene, butadiene, acrylonitrile, and vinyl acetate. Liquid polymeric tougheners are typically based on a polyurethane polymers, nitrile butadiene polymers or polyacrylate rubbers. Therefore, in one embodiment the curable compositions provided herein and including the coatings or cured compositions obtained therefrom are free of polymeric tougheners.

### Methods of making curable compositions

The curable compositions of the invention can be readily prepared by techniques known in the art. The compositions provided herein may be in the form of one-part (1 K) or two-part compositions (2K compositions), with two-part compositions being preferred. In two part compositions, the curing components are kept separated from the epoxy resin and are combined before being applied to the surface to be coated. Curing components and epoxy resins of 2K composition are reactive at room temperature, i.e. they are reactive enough to start the curing reaction already at room temperature, e.g. at 23°C and do not require any heating to initiate the curing reaction. Two-part compositions typically comprise a part A (containing the curing system) and separate therefrom a part B (containing the epoxy components). Further separate parts containing further ingredients of the curable compositions are also contemplated. Part A, or part B, or part A and part B, preferably part A and part B comprise the fatty acid polyamide. Part A or/and part B, preferably both part A and part B comprise the fillers. Part A may also comprise the secondary curative. Part A or/and part B may also comprise the other ingredients described herein.

The components of the individual parts are mixed and homogenized, typically using a high shear mixer (e.g. available from Hauschild Engineering). It is preferred to first mix part of the total amount of the fatty acid polyamide with the curing agent (part A) and the remainder of the amount of fatty acid polyamide with the epoxy resin (part B). The mixtures may be heated to improve mixing and homogenization. A temperature is preferably chosen at which the fatty acid polyamides melt. After cooling to room temperature the other ingredients are typically added while stirring in a high speed mixer as mentioned above. Mixing of Part A and Part B is preferably carried out prior to immediate use as coating composition, i.e. prior to the application on the substrate to be coated.

In embodiments where the curable coating composition is a two-part composition the weight percentages of the ingredients described herein are based on the total weight of the final curable coating composition, i.e. the individual parts combined.

The curable coating composition can be applied to substrates by conventional application equipment such as extruders or pumps. Preferably, the components are present in effective amounts to yield extrudable coating compositions, i.e the curable compositons be it 1 K or 2K compositions are extrudable. In a two-part system both parts are preferably extrudable to allow dispensing and mixing, for example, in dual Pac cartridges. Typically the curable coating composition (or also the individual components of 2K compositions) has an extrusion rate of from about 10 to 50 g/min, preferably between 15 and 40 g/min, when extruded through a circular nozzle having a 4.0 mm diameter at 5 bar pressure for 60 seconds. 2K compositions are typically applied to substrates in 2K cartridges (cartridges containing two separate cartridges containing the A and B part of the curable composition) and are extruded through a mixing nozzle using a pneumatic pump. These are typically hand-held devices applying a pressure of from about 2 to 8 bar.

The optimum ratios and amounts of the individual ingredients of the curable compositions according to the present disclosure can be chosen according to the desired properties of the curable composition, like for example the extrusion rate described above, and/or the desired properties of the reaction product of the curing reaction (e.g. the desired coating) like, for example, the compressive strength, density and/or water absorption or the combination of one or more or all of the afore-mentioned properties. The curable compositions according to the present disclosure are preferably selected and adapted to provide a cured composition having one or more of the following properties:
(i) a compression strength of at least 3 MPa over a temperature range from about -55°C to about 120°C, preferably at 23°C and 106°C;
(ii) a compression strength of at least 25 MPa at 23°C;
(iii) a density of between about 0.4 to about 0.6 g/cm³;
(iv) a water uptake of less than about 10% by weight after immersion in water at 23 °C.

A typical curable coating compositions according to the disclosure provided herein comprises from about 20 to about 40 % by weight of the epoxy resin, from about 0.5 to about 5.0 % by weight of the curing agent, from 0.5 to about 5.0 % by weight of the fatty acid polyamide and from about 20 to about 40 % by weight of the filler comprising hollow particles, wherein the percentages by weight are based on the total amount of the composition and the total amount of the weight percentages gives 100%. The amine curing agents and their amounts are preferably selected to provide an amine hydrogen equivalent weight corresponding to about 0.3 to about 0.7 times the epoxy equivalent weight of the epoxy resin.

### Coatings obtained with the curable coating compositions

Coatings are obtained by applying the curable compositions onto the substrate to be coated and subjecting the curable composition to curing. The resulting reaction product of the curing reaction yields a coating on the substrate. The curable compositions are typically applied to the substrate (typically a shaped article) to be coated by extrusion. The curable compositions can subsequently be cured on the substrate at room temperature, optionally followed by a heat curing or by subjecting the curable composition to elevated temperatures. The optimum curing conditions can be adapted to the material to be coated and the specific composition of the curable composition by routine experimentation. The curable compositions provided herein are preferably curable at room temperature. Preferably, complete curing can be reached at room temperature (25°C) and 50% relative humidity after less than 7 days. Completeness of the curing can be determined by measuring the compression strength of a cured sample at various periods in time. When the compression strength does not change within the error interval of the measurements, the curing can be regarded as complete.

The curable compositions can be applied to various substrates where they provide good adhesion. The substrates are generally shaped articles, or more specifically one or more external surfaces of the shaped articles. Such substrates may include metals and polymer resins. Preferred metals include aluminium, steel and alloys thereof. Preferred polymer resins include phenolic resins (i.e. polymers containing repeating units derived from reacting a phenol with formaldehyde), resins comprising or consisting of polyethylene, polypropylene, polycarbonate, polyester, polyamide, polyimide, polyacrylate, or polyoxymethylene or mixtures thereof. Other preferred suitable resins include epoxy resins (e.g. resins containing repeating units derived from cross-reacting monomers or components containing epoxy groups). The curable compositions are particularly suitable for providing a coating on composite materials, containing a polymeric resin as mentioned above and embedded therein fibers, typically glass fibers, carbon fibers, KEVLAR fibers or combinations thereof. The curable compositions are useful as coatings for exterior parts of articles, i.e. parts of articles that may be exposed to the weather. Such articles may be components of aircrafts or wind energy power stations, like rotor blades of wind turbines, because they are easily applicable, light weight and water resistant. In particular they are useful to form a coating on an exterior surface of an aircraft selected from an airplane or a helicopter. In particular, the coating compositions are suitable to provide a coating onto the wing or tail of an aircraft and more particular on the flaps of the wing or on components thereof. Typical components have an external surface that forms part of the exterior surface of the aircraft. The coatings are especially suitable the external surface of such components and for exterior applications in general, because they have a low water uptake and they retain their low weight under wet conditions.

The coatings obtained by curing the curable compositions provided herein typically have a smooth surface. Typically the smooth surface of the coating has no cracks or pinholes that are visible to the naked eye. Preferably, a rectangular surface of 12.5 cm x 25 cm or a circular surface having a diameter of 25 cm of a 12.5 mm thick coating has at its exterior surface no pinholes or cracks having as their largest dimension a length or diameter that is greater than 0.1 mm.

The coatings provided herein have no or very little visible surface defects and can easily be lacquered or painted. Such painted or lacquered coatings provide a homogeneous or even appearance because of the smooth surface of the coatings.

Cured coating compositions which are obtainable by curing the corresponding curable compositions can be prepared that have low density and exhibit advantageous mechanical properties evaluated, for example, in terms of compressive strength. In particular the cured compositions have good compressive strength at room temperature but also at elevated temperatures. In addition, the cured compositions have a low water uptake (or water absorption). For example, the coatings may have one or more or all of the following properties:
a) a water uptake of less than 10% after 1000 hours immersion in water at 23 °C;
b) a compressive strength of at least about 25 MPa at 23 °C.
c) a compressive strength of at least about 3 MPa at a temperature of -55°C and 130°C, in particular at 23°C and at 106°C;
d) a density of from about 0.4 to about 0.6 g/cm³.

The invention is furthermore illustrated by the list of particular embodiments and examples described below. Prior to that some test methods used to characterize the compositions will be described. The list of embodiments, examples and methods are provided for illustrative purposes only and are not meant to limit the invention thereto.

Unless specified otherwise, percentages are percentages by weight with respect to the total mass of the curable or of the cured composition, respectively. Above and below, the mass percentages of all components of a curable or a cured composition, respectively, add up in each case to 100 weight percent.

### EXAMPLES

### Materials used:

ANCAMINE K54: Tris-2,4,6-dimethyl amino methylphenol (Air Products and Chemicals, Inc., Allentown/PA/USA);
AEROSIL R202: hydrophobic fumed silica (Evonik Industries AG, Frankfurt, Germany);
EPODIL 757: 1,4-cyclohexane dimethanol diglycidyl ether (Air Products and Chemicals Inc., Allentown, PA / USA);
GLASS BUBBLES D32: hollow glass particles, density 0.32 g/cc (3M Company, USA); Z-6040: epoxy silane (Dow Corning, Germany);
EPIKOTE 232: low-medium viscosity epoxy resin consisting of a blend of bisphenol A and bisphenol F resin (Momentive Specialty Chemicals Inc.);
DISPERLON 6500: non-reactive polyamide (Kusumoto);
JEFFAMINE D-230: polyether diamine curing agent (Huntsman);
VERSAMINE C31: cycloaliphatic amine curing agent (Cognis).

### Preparation of two part epoxy compositions

### Preparation of Part A:

The curing agent was heated together with the fatty acid polyamide to 80°C and the mixture was stirred for 60 minutes. The remaining ingredients as listed in table 1 were added at room temperature (23°C) while stirring for 1 minute using a high speed mixer (DAC 150 FVZ Speed mixer, Hauschild Engineering, Germany) at 3000 rpm. The ingredients were added in small amounts to make sure that all raw materials were homogeneously dispersed.

### Preparation of Part B:

Epoxy resin and the fatty acid polyamide were mixed at 23 °C with stirring for 10 minutes. Then the mixture was heated to 80°C and held for 90 minutes. The mixture was cooled down to room temperature. The remaining ingredients as listed in table 2 were subsequently added and homogenized with a high speed mixer (a DAC 150 FVZ Speedmixer, Hauschild Engineering) stirring at 3000 rpm for 1 minute after each addition at 23 °C).

### Mixing of Part A and Part B and extrusion:

A 400 ml Cartridge (Sulzer Mixpac AG, Haag, Switzerland) was filled manually to 400 ml with parts B and parts A in a ratio of 2:1 by volume.

A mixing nozzle of type MC 13-18 (4.0 mm aperture Sulzer Mixpac AG, Haag, Switzerland) was fitted to the cartridge. The product was extruded from the cartridge by using a pneumatic dispensing gun at a pressure of 5 bar, directly into a silicon mould having the dimensions of 12.5 mm (height) x 12.5 mm (width) x 25mm (length) and being open on one major side. The filled units were then left to cure at room temperature (23°C & 50% relative humidity) for 7 days.

### Test Methods:

### Water uptake (or water absorption)

After curing, the cured specimens were removed and individually weighed. Afterwards the specimens were immersed in distilled water at 23°C. After 1000 hours immersion the samples were rubbed dry with a paper cloth and weighed again. The percentage of water absorption was calculated as follow: (Specimen weight after immersion/Specimen weight before immersion) x 100.The data recorded are the average of the measurements from 6 specimens.

### Compressive Strength

After curing, the cured specimens were removed from the mould and subjected to compression test according to ISO 604 procedure. The test specimens were compressed until failure along their 25 mm axis at a rate of 0.5 mm/min by using a Zwick Model Z030 Tensile Tester (Zwick GmbH & Co KG, Ulm, Germany), equipped with heating chamber. The compressive strength was measured both at 23°C and at 106°C. The test specimens were preconditioned in the heated equipment for at least 30 minutes before testing at 106°C. At least three samples were measured for each epoxy composition and the results averaged and recorded in MPa.

### Density

After curing, the cured specimens were removed from the mould and their exact dimensions recorded. Each sample was weighed and the density calculated and recorded in grams per cm³.

### Extrusion Rate

A 400 ml Cartridge for 2K compositions (Sulzer Mixpac AG, Haag, Switzerland) was filled manually to 400 ml with parts B and parts A in a ratio of 2:1 by volume. A mixing nozzle of type MC 13-18 (static 2K mixer from Sulzer Mixpac AG, Haag, Switzerland) was fitted to the cartridge. The mixing nozzle has a circular outlet nozzle having a diameter of 4.0 mm. The product was extruded from the cartridge by using a pneumatic dispensing gun. The extrusion rate was determined by measuring the quantity extruded applying a pressure 5 bar for 60 seconds. Measurements were made at room temperature. Each composition was tested 3 times and the results were expressed in g/min and represent the average from the three measurements.

### Examples

### Example 1 and comparative examples C-1 and C-2

In example 1 a 2K composition was prepared from part A1 comprising cycloaliphatic amine and fatty acid polyamide and Part B1, comprising epoxy resin, fatty acid polyamide and filler comprising hollow particles. Comparative example C-1 was made with part A2, comprising aliphatic amine and fatty acid polyamide and part B1, comprising epoxy resin, fatty acid polyamide and filler comprising hollow particles. Comparative example C-2 was prepared from part A3 and part B2, both comprising fumed silica rather than fatty acid polyamide. The ingredients and amounts of the A and B parts are indicated in tables 1 and 2. Curable compositions were prepared by mixing the respective A and B parts. Extrusion, curing and examination of the samples were done according to the general procedures given above. Test results are shown in table 3.

**Table 1: composition of A-part**

| Ingredients (in % by weight) | A1 | A2 | A3 |
|---|---|---|---|
| VERSAMINE C31 | 62 | 0 | 62 |
| JEFFAMINE D230 | 0 | 62 | 0 |
| ANCAMINE K54 | 4 | 4 | 4 |
| GLASS BUBBLES D32 | 32 | 32 | 32 |
| DISPERLON 6500 | 1.5 | 1.5 | 0 |
| Pigment | 0.5 | 0.5 | 0.5 |
| AEROSIL R202 | 0 | 0 | 1.5 |
| Total | 100 | 100 | 100 |

**Table 2: Composition of the B-part**

| Ingredients (in % by weight) | B1 | B2 |
|---|---|---|
| EPIKOTE 232 | 61 | 61 |
| EPODIL 757 | 11 | 11 |
| GLASS BUBLLES D32 | 25 | 25 |
| Z-6040 | 1.5 | 1.5 |
| DISPARLON 6500 | 1.5 | 0 |
| AEROSIL R202 | 0 | 1.5 |
| Total | 100,00 | 100,00 |

**Table 3: Properties of cured epoxy resins**

| Test | Ex 1 (B1/A1) | C-1 (B1/A2) | C-2 (B2/A3) |
|---|---|---|---|
| Water absorption (%) | 5 | > 10 | > 10 |
| Cured density (g/cm³) | > 0.4; <0.61 | > 0.4; <0.61 | > 0.4; <0.61 |
| Compression strength at 23 °C (MPa) | 32 | 25 | 32 |
| Compression strength at 106 °C (MPa) | 7 | 4 | 6 |
| Extrusion rate from dual Pac Cartridge (g/min) | 20 - 30 | 20 - 30 | < 20 |

After curing, the surface of the composition according to example 1 was smooth and uniform without pores visible to the naked eye. After curing, the surface of comparative example C-2 showed air bubbles and pinholes.

The following list of embodiments is provided to further illustrate the present disclosure without any intention to limit the disclosure to the specific embodiments listed.

### LIST OF PARTICULAR EMBODIMENTS:

1. A curable composition comprising
   (i) at least one aromatic epoxy resin;
   (ii) at least one curing agent for curing the aromatic epoxy resin said curing agent comprising at least one cycloaliphatic amine;
   (iii) at least one fatty acid polyamide having a melting point of from 100°C to 145°C, wherein the fatty acid polyamide contains at least two end-groups according to the formula (I)

      -NR^{a}-CO-R^{b}

      wherein R^{a} represents H or an alkyl group having from 1 to 4 carbon atoms and R^{b} represents a saturated or unsaturated alkyl chain containing from 3 to 27 carbon atoms; and
   (iv) at least one filler material comprising hollow particles.
2. The curable composition of embodiment 1 wherein the at least one fatty acid polyamide contains at least two end-groups according to the formula (II)

   -NR^{a}-CO-R^{b}

   wherein R^{a} represents H and R^{b} represents a saturated or unsaturated alkyl chain containing from 3 to 27 carbon atoms.
3. The curable composition according to any one of embodiments 1 or 2 wherein the at least one aromatic epoxy resin comprises repeating units obtainable by a polymerisation of a dihydric phenol with epichlorohydrine.
4. The curable composition according to any one of embodiments 1 to 3 wherein the epoxy resin is liquid.
5. The curable compositions according to any one of embodiment 1 to 4 wherein the epoxy resin has a viscosity as measured according to ASTM D445 of from about 4 to about 10, preferably from about 4.5 to 6.0 MPa.s at 20°C.
6. The curable composition according to any one of embodiments 1 to 5 wherein the epoxy resin has an epoxy equivalent weight of from about 170 to 200 (ASTM D 1652).
7. The curable composition according to any one of embodiments 1 to 6 wherein the amine curing reagents and the epoxy resin are present in a ratio of about one amine group per two epoxy groups within a deviation of 10%.
8. The curable composition according to any one of the embodiments 1 to 7 wherein the epoxy resin is free of polysulfide units and/or acrylate units
9. The curable composition according to any one of embodiments 1 to 8 further comprising a saturated hydrocarbon solid having a melting point at a temperature between 100°C and 145°C.
10. The curable composition according to any one of embodiments 1 to 9 wherein the hollow particles are hollow glass particles.
11. The curable compositions according to any one of the preceding embodiments wherein the filler material comprising hollow particles has a density of from about 0.3 to about 0.5 g/cm³.
12. The curable composition according to any one of embodiments 1 to 11 having an extrusion rate of from about 10 g/min to 50 g/min when being extruded at a temperature of 23°C and a pressure of 5 bar for 60 seconds through a circular aperture having a diameter of 4.0 mm.
13. The curable composition according to any one of embodiments 1 to 12 wherein the composition is a two part composition comprising separated from each other a first component comprising the at least one aromatic epoxy resin and a second component comprising the curing agent and where the first, the second or both parts contain the at least one fatty acid polyamide.
14. The curable composition according to any one of embodiments 1 to 13 being free of polymeric tougheners.
15. A cured composition obtained by curing the curable composition according to any one of embodiments 1 to 14.
16. The cured composition according to embodiment 15 having a density of less than 0.8 g/cm³, preferably a density from about 0.4 to about 0.7 g/cm³
17. The cured composition according to any one of embodiments 15 or 16 having a compression strength at 23°C of greater than about 20 MPa.
18. The cured composition according to any one of embodiments 15 to 17 having a compression strength at 23°C of from about 22 to about 32 MPa.
19. The cured composition according to any one of embodiments 15 to 18 having a compression strength of at least about 3 MPa at a temperature of 23°C and 106°C.
20. The cured composition according to any one of embodiments 15 to 19 having a water uptake of less than about 10% by weight after 1000 hours immersion in water at 23 °C.
21. Method of coating a substrate the method comprising
   i) providing a curable composition as defined in any one of embodiments 1 to 14 ;
   ii) applying the curable composition to the substrate;
   iii) subjecting the curable composition to curing.
22. The method of embodiment 21 wherein the substrate is selected from substrates comprising aluminum, steel, composite materials comprising fiber reinforced polymeric resins.
23. The method according to any one of embodiments 21 and 22 wherein the substrate is the exterior surface of an article.
24. The method according to any one of embodiments 21 to 23 wherein the substrate is the exterior surface of an article that forms part of the exterior surface of an aircraft or a wind-energy generating device.
25. An article having an external surface, said surface comprises a coating comprising the cured composition according to any one of embodiments 15 to 20.
26. The article of embodiment 25 wherein the article is a component of a transport vehicle or a wind energy-generating device, wherein the external surface of the article forms part of the external surface of the transport vehicle or the wind energy-generating device when installed therein.
27. The article of any one of embodiments 25 or 26 wherein the article is a component of a wing, fin or rotor blade.
28. The article of any one of embodiments 25 to 27 wherein the external surface of the article comprises a composite material containing a polymeric resin and one or more fiber materials.
29. The article of any one of embodiments 25 to 28 being a flap of a wing or a component of the flap of a wing of an aircraft.
30. Use of the curable composition according to any one of embodiments 1 to 14 for coating the external surface of an article, wherein the article is a component of an aircraft or wind energy power generator, wherein the external surface of the article forms part of the external surface of the aircraft or wind-energy generator when installed therein.
31. The use of embodiment 30 to provide a coating having a density of less than about 0.8 g/cm³, preferably between about 0.4 to about 0.6 g/cm³.
32. The use of embodiments 30 or 31 to provide a coating having a compression strength at 23 °C of greater than about 20 MPa.
33. The use of embodiments 30 to 32 to provide a coating having a compression strength at 23 °C of from about 22 to about 32 MPa.
34. The use of embodiments 30 to 33 to provide a coating having a compression strength at 23°C and at 106°C of at least about 3MPA.
35. The use of embodiments 30 to 34 to provide a coating having a density of less than about 0.8 g/cm³, preferably between about 0.4 to about 0.6 g/cm³.
36. The use of embodiments 30 to 35 to provide a coating having a water uptake of less than about 10% by weight after 1000 hours immersion in water at 23°C.
37. A coating on a substrate, the coating comprising the reaction product of a curing reaction of a composition comprising
   (i) at least one aromatic epoxy resin
   (ii) at least one curing agent for curing the aromatic epoxy resin said curing agent comprising at least one cycloaliphatic amine,
   (iii) at least one fatty acid polyamide having a melting point of from about 100 °C to about 145°C, wherein the fatty acid polyamide contains at least two end-groups according to the formula (I)

      -NR^{a}-CO-R^{b}

      wherein R^{a} represents H or an alkyl group having from 1 to 4 carbon atoms and R^{b} represents a saturated or unsaturated alkyl chain containing from 3 to 27 carbon atoms ; and
   (iv) at least one filler material comprising hollow particles;
   wherein the substrate is the external surface of an article that is a component of an aircraft or wind energy power generator, wherein the external surface of the article forms part of the external surface of the aircraft or wind-energy generator when installed therein.
38. The coating of embodiment 35 wherein the article is a component of a wing, a fin, or a rotor blade.
39. The coating according to any one of embodiments 37 or 38 wherein the substrate comprises a composite material containing a polymeric resin and one or more fiber materials.
40. The coating according to any one of embodiments 37 to 39 wherein the article is a flap of a wing or a component of the flap of a wing of an aircraft.
41. The coating according to any of embodiments 37 to 40 having a density of less than 0.8 g/cm³, preferably between about 0.4 to about 0.6 g/cm³.
42. The coating according to any one of embodiments 37 to 41 having a compression strength at 23°C of greater than about 20 MPa.
43. The coating according to any one of embodiments 37 to 41 having a compression strength at 23°C of from about 22 to about 32 MPa.
44. The coating according to any one of embodiments 37 to 43 having a compression strength of at least 3 MPA at 23°C and at 106°C.
45. The coating according to any one of embodiments 37 to 44 having a water uptake of less than about 10% by weight after 1000 hours immersion in water at 23°C.

## Claims

1. A curable composition comprising
(i) at least one aromatic epoxy resin;
(ii) at least one curing agent for curing the aromatic epoxy resin said curing agent comprising at least one cycloaliphatic amine;
(iii) at least one fatty acid polyamide having a melting point of from 100°C to 145°C, wherein the fatty acid polyamide contains at least two end-groups according to the formula (I)
-NR^{a}-CO-R^{b}
wherein R^{a} represents H or an alkyl group having from 1 to 4 carbon atoms and R^{b} represents a saturated or unsaturated alkyl chain containing from 3 to 27 carbon atoms; and
(iv) at least one filler material comprising hollow particles.

2. The curable composition according to Claim 1, further comprising a saturated hydrocarbon solid having a melting point at a temperature between 100°C and 145 °C.

3. The curable composition according to any one of claims 1 to 2 wherein the hollow particles are hollow glass particles.

4. The curable composition according to any one of claims 1 to 3 having an extrusion rate of from about 10 g/min to 50 g/min when being extruded at a temperature of 23°C and a pressure of 5 bar for 60 seconds through a circular aperture having a diameter of 4.0 mm.

5. A coating comprising the reaction product of a curing reaction of the curable composition according to any one of claims 1 to 4.

6. The coating according to claim 5 having a density of between about 0.4 and about 0.6 g/cm³.

7. The coating according to any one of claims 5 or 6 having a compression strength at 23°C of from about 22 to about 32 MPa.

8. The coating according to any one of claims 5 to 7 having a water uptake of less than about 10% by weight after 1000 hours immersion in water at 23 °C.

9. Method of coating a substrate the method comprising
i) providing a curable composition as defined in any one of claims 1 to 4,
ii) applying the curable composition to the substrate,
iii) subjecting the curable composition to curing.

10. The method of claim 9 wherein the substrate is selected from substrates comprising aluminum, steel, composite materials comprising fiber reinforced polymeric resins.

11. The method according to any one of claims 9 or 10 wherein the substrate is the external surface of an article wherein the article is a component of a transport vehicle or a wind energy-generating device, wherein the external surface of the article forms part of the external surface of the transport vehicle or the wind energy-generating device when installed therein.

12. An article having an external surface, said surface comprises the coating according to any one of claims 5 to 8 wherein the article is a component of a transport vehicle or a wind energy-generating device, wherein the external surface of the article is part of the external surface of the transport vehicle or the wind energy-generating device, when installed therein.

13. The article of claim 12 wherein the article is a component of a wing, fin, or rotor blade.

14. The component according to any one of claims 12 or 13 wherein the external surface comprises a composite material containing a polymeric resin and one or more fiber materials.

15. The component according to any one of claims 12 to 14 being a flap of a wing or a component of the flap of a wing of an aircraft.

## Patentansprüche

1. Härtbare Zusammensetzung, umfassend
(i) mindestens ein aromatisches Epoxidharz;
(ii) mindestens ein Härtungsmittel zum Härten des aromatischen Epoxidharzes, wobei das Härtungsmittel mindestens ein cycloaliphatisches Amin umfasst;
(iii) mindestens ein Fettsäurepolyamid mit einem Schmelzpunkt von 100°C bis 145°C, wobei das Fettsäurepolyamid mindestens zwei Endgruppen gemäß der Formel (I)
-NR^{a}-CO-R^{b}
enthält, wobei R^{a} für H oder eine Alkylgruppe mit 1 bis 4 Kohlenstoffatomen steht und R^{b} für eine gesättigte oder ungesättigte Alkylkette mit 3 bis 27 Kohlenstoffatomen steht; und
(iv) mindestens einen Füllstoff, der hohle Teilchen umfasst.

2. Härtbare Zusammensetzung nach Anspruch 1, ferner umfassend einen gesättigten Kohlenwasserstofffeststoff mit einem Schmelzpunkt bei einer Temperatur zwischen 100°C und 145°C.

3. Härtbare Zusammensetzung nach einem der Ansprüche 1 bis 2, wobei es sich bei den hohlen Teilchen um hohle Glasteilchen handelt.

4. Härtbare Zusammensetzung nach einem der Ansprüche 1 bis 3 mit einer Extrusionsrate von etwa 10 g/min bis 50 g/min bei Extrusion bei einer Temperatur von 23°C und einem Druck von 5 bar über einen Zeitraum von 60 Sekunden durch eine kreisförmige Öffnung mit einem Durchmesser von 4,0 mm.

5. Beschichtung, umfassend das Reaktionsprodukt
einer Härtungsreaktion der härtbaren Zusammensetzung nach einem der Ansprüche 1 bis 4.

6. Beschichtung nach Anspruch 5 mit einer Dichte zwischen etwa 0,4 und etwa 0,6 g/cm³.

7. Beschichtung nach einem der Ansprüche 5 oder 6 mit einer Druckfestigkeit bei 23°C von etwa 22 bis etwa 32 MPa.

8. Beschichtung nach einem der Ansprüche 5 bis 7 mit einer Wasseraufnahme von weniger als etwa 10 Gew.-% nach 1000 Stunden Eintauchen in Wasser bei 23°C.

9. Verfahren zum Beschichten eines Substrats, bei dem man
i) eine härtbare Zusammensetzung gemäß einem der Ansprüche 1 bis 4 bereitstellt,
ii) die härtbare Zusammensetzung auf das Substrat aufbringt,
iii) die härtbare Zusammensetzung Härtung unterwirft.

10. Verfahren nach Anspruch 9, bei dem man das Substrat aus Substraten, umfassend Aluminium, Stahl, Verbundwerkstoffe, die faserverstärkte Polymerharze umfassen, auswählt.

11. Verfahren nach einem der Ansprüche 9 oder 10, bei dem es sich bei dem Substrat um die Außenoberfläche eines Gegenstands handelt, wobei es sich bei dem Gegenstand um ein Bauteil eines Transportfahrzeugs oder einer Windenergieerzeugungsvorrichtung handelt, wobei die Außenoberfläche des Gegenstands einen Teil der Außenoberfläche des Transportfahrzeugs bzw. der Windenergieerzeugungsvorrichtung bei Installation darin bildet.

12. Gegenstand mit einer Außenoberfläche, wobei die Oberfläche die Beschichtung nach einem der Ansprüche 5 bis 8 umfasst, wobei es sich bei dem Gegenstand um ein Bauteil eines Transportfahrzeugs oder einer Windenergieerzeugungsvorrichtung handelt, wobei die Außenoberfläche des Gegenstands Teil der Außenoberfläche des Transportfahrzeugs bzw. der Windenergieerzeugungsvorrichtung bei Installation darin ist.

13. Gegenstand nach Anspruch 12, wobei es sich bei dem Gegenstand um ein Bauteil eines Flügels, einer Flosse oder einer Rotorschaufel handelt.

14. Bauteil nach einem der Ansprüche 12 oder 13, wobei die Außenoberfläche einen Verbundwerkstoff, der ein Polymerharz und ein oder mehrere Fasermaterialien enthält, umfasst.

15. Bauteil nach einem der Ansprüche 12 bis 14, bei dem es sich um eine Klappe eines Flügels oder einen Bauteil der Klappe eines Flügels eines Luftfahrzeugs handelt.

## Revendications

1. Composition durcissable comprenant :
(i) au moins une résine époxyde aromatique ;
(ii) au moins un agent de durcissement pour le durcissement de la résine époxyde aromatique, ledit agent de durcissement comprenant au moins une amine cycloaliphatique ;
(iii) au moins un polyamide à base d'acide gras ayant un point de fusion de 100 °C à 145 °C, le polyamide à base d'acide gras contenant au moins deux groupes terminaux selon la formule (I) :
-NR^{a}-CO-R^{b}
dans laquelle R^{a} représente un atome d'hydrogène ou un groupe alkyle contenant 1 à 4 atomes de carbone et R^{b} représente une chaîne alkyle saturée ou insaturée contenant 3 à 27 atomes de carbone ; et
(iv) au moins un matériau de charge comprenant des particules creuses.

2. Composition durcissable selon la revendication 1, comprenant en outre un hydrocarbure saturé solide ayant un point de fusion à une température de 100 °C à 145 °C.

3. Composition durcissable selon l'une quelconque des revendications 1 ou 2, dans laquelle les particules creuses sont des particules creuses en verre.

4. Composition durcissable selon l'une quelconque des revendications 1 à 3, ayant une vitesse d'extrusion d'environ 10 g/min à 50 g/min durant une extrusion à une température de 23 °C et à une pression de 5 bars pendant 60 secondes à travers une ouverture circulaire de 4,0 mm de diamètre.

5. Revêtement comprenant le produit réactionnel d'une réaction de durcissement de la composition durcissable selon l'une quelconque des revendications 1 à 4.

6. Revêtement selon la revendication 5, ayant une densité d'environ 0,4 g/cm³ à environ 0,6 g/cm³.

7. Revêtement selon l'une quelconque des revendications 5 ou 6, ayant une résistance à la compression à 23 °C d'environ 22 MPa à environ 32 MPa.

8. Revêtement selon l'une quelconque des revendications 5 à 7, ayant une absorption d'eau inférieure à environ 10 % en poids après une immersion dans de l'eau à 23 °C pendant 1 000 heures.

9. Procédé de revêtement d'un substrat, le procédé comprenant :
i) la fourniture d'une composition durcissable selon l'une quelconque des revendications 1 à 4,
ii) l'application de la composition durcissable sur le substrat,
iii) le fait de soumettre la composition durcissable à un durcissement.

10. Procédé selon la revendication 9, dans lequel le substrat est sélectionné parmi des substrats comprenant l'aluminium, l'acier, et des matériaux composites comprenant des résines polymères renforcées par des fibres.

11. Procédé selon l'une quelconque des revendications 9 ou 10, dans lequel le substrat est la surface externe d'un article, l'article étant un élément constitutif d'un véhicule de transport ou d'un dispositif générateur d'énergie éolienne, la surface externe de l'article faisant partie de la surface externe du véhicule de transport ou du dispositif générateur d'énergie éolienne après son installation dans celui-ci.

12. Article comportant une surface externe, ladite surface comprenant le revêtement selon l'une quelconque des revendications 5 à 8, l'article étant un élément constitutif d'un véhicule de transport ou d'un dispositif générateur d'énergie éolienne, la surface externe de l'article faisant partie de la surface externe du véhicule de transport ou du dispositif générateur d'énergie éolienne après son installation dans celui-ci.

13. Article selon la revendication 12, l'article étant un élément constitutif d'une aile, d'une ailette, ou d'une aube de rotor.

14. Élément constitutif selon l'une quelconque des revendications 12 ou 13, dans lequel la surface externe comprend un matériau composite contenant une résine polymère et un ou plusieurs matériaux fibreux.

15. Élément constitutif selon l'une quelconque des revendications 12 à 14, lequel est un volet d'une aile ou un élément constitutif du volet d'une aile d'avion.
